# EUROPÄISCHE PATENTSCHRIFT

(11) **EP 0 596 251 B1**
(45) Veröffentlichungstag und Bekanntmachung des Hinweises auf die Patenterteilung: **24.04.1996**
(21) Anmeldenummer: 93115882.8
(22) Anmeldetag: 01.10.1993
(51) Int. Cl.: B62D 21/12

(54) **Querträger für einen Fahrschemel**
Crossmember for a subframe
Poutre transversale pour un faux-châssis

(30) Priorität: 06.11.1992 DE 4237533
(43) Veröffentlichungstag der Anmeldung: 11.05.1994
(73) Patentinhaber: Dr.Ing.h.c. F. Porsche Aktiengesellschaft, D-70435 Stuttgart (DE)
(72) Erfinder: Michalski, Ralph, D-71665 Vaihingen (DE); Soeffge, Friedhelm, D 71229 Leonberg-Gerbersheim (DE); Kronewitter, Rudolf, D 71032 Böblingen (DE)

(56) Entgegenhaltungen:
- DE-A- 3 927 987
- DE-B- 1 278 855

## Beschreibung

Die Erfindung bezieht sich auf einen Querträger für einen Fahrschemel nach den Oberbegriff des Anspruches 1.

Aus der DE 12 78 855 ist ein Fahrschemel bekannt, der einen mit den Seitenteilen verschweissten, einteiligen Querträger aufweist.

Aufgabe der Erfindung ist es, einen Querträger für einen Fahrschemel eines Kraftfahrzeuges zu schaffen, mit dem im Verbund mit Seitenteilen eine stabile Baueinheit herstellbar ist und der eine Verbesserung des Vorspurverhaltens sowie eine definierte Sturzsteifigkeit gewährleistet. Desweiteren sollen die beiden Teile des Querträgers in der Breite einstellbar ausgebildet sein.

Diese Aufgabe wird erfindungsgemäß durch die kennzeichnenden Merkmale des Anspruches 1 gelöst. Weitere vorteilhafte Merkmale beinhalten die Unteransprüche.

Die mit der Erfindung hauptsächlich erzielten Vorteile bestehen darin, daß der Querträger aus zwei baugleichen Teilen besteht, die in der Mittenlängsachse des Fahrzeuges über zwei in einer horizontalen Ebene angeordneten Befestigungsschrauben verbunden sind. Damit eine Anpassung des Querträgers an die Seitenteile des Fahrschemels in einfacher Weise erfolgen kann, sind die Befestigungsschrauben jeweils in einer Aufnahme des Trägerteiles in einem Langloch geführt.

Die Trägerteile weisen an querverlaufenden, horizontal ausgerichteten Schenkeln des Verbindungsbereiches Zungen auf, die in der Befestigungsposition überlappend angeordnet sind und insgesamt die Breite des Querträgers nicht übersteigen. In den Zungen sind jeweils zwei Aufnahmen für die Befestigungsschrauben vorgesehen, wobei die eine Aufnahme zum Verstellen der Querträgerteile in der Breite ein Langloch aufweisen.

Die etwa vertikal verlaufenden Schenkel der Trägerteile sind mit Seitenteilen verbunden, an den eine Radaufhängung bzw. Lenker der Aufhängung eines Kraftfahrzeuges gelagert sind. Damit einer unbeabsichtigte Rabewegung entgegengewirkt werden kann, ist ein verbindungssteifer, aus dem Querträger und den Seitenteilen bestehender Fahrschemel erforderlich. Hierzu trägt im wesentlichen der Querträger bei, der einerseits ein geringes Gewicht und andererseits eine hohe Torsionssteifigkeit besitzt, damit insgesamt das Vorspurverhalten der Achse nicht nachteilig beeinfluß wird.

Der Bereich zwischen den beiden Anschraubungen zum Seitenteil werden hierzu besonders torsionssteif ausgelegt, indem in diesem Bereich ein geschlossenes I-Profil mit Kreuzrippen verwendet wird. Der sich anschließende Schenkel, welcher sich etwa in einer horizontalen Ebene erstreckt, erfordert nur noch eine Auslegung des Trägerteils auf Zug-, Druck- und Biegesteifigkeit, wozu ein offenes I-Profil mit den Ausnehmungen umgebenden Rippen erforderlich ist.

Durch die Verbindung der beiden Trägerteile untereinander über zwei Befestigungsschrauben wird das Seitenteil in seiner Sturzsteifigkeit unterstutzt, sodaß eine ungewollte Radverstellung bei Krafteinwirkung ausgeschlossen wird.

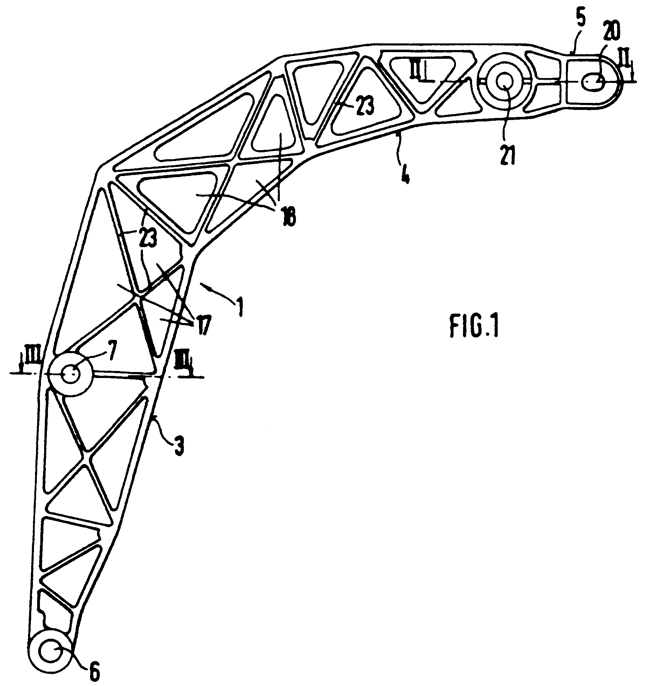

Ein Ausführungsbeispiel der Erfindung ist in der Zeichnung dargestellt, und wird im folgenden näher beschrieben:
Es zeigen
- Fig. 1: eine Vorderansicht eines in bezug auf die Fahrtrichtung linken Trägerteiles,

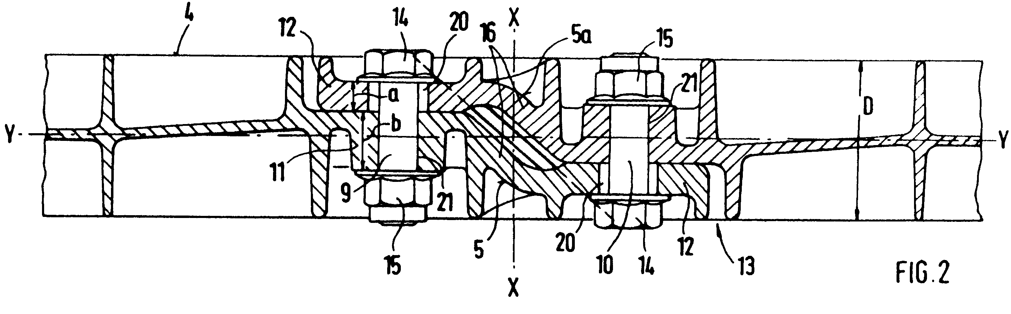

- Fig. 2: einen Schnitt nach der Linie II-II der Fig. 1, wobei auch der rechte Trägerteil teilweise im Schnitt dargestellt ist und
- Fig. 3: einen Schnitt nach der Linie III-III der Fig. 1 durch eine Verbindung des Trägerteiles zum Seitenteil eines Fahrschemels.

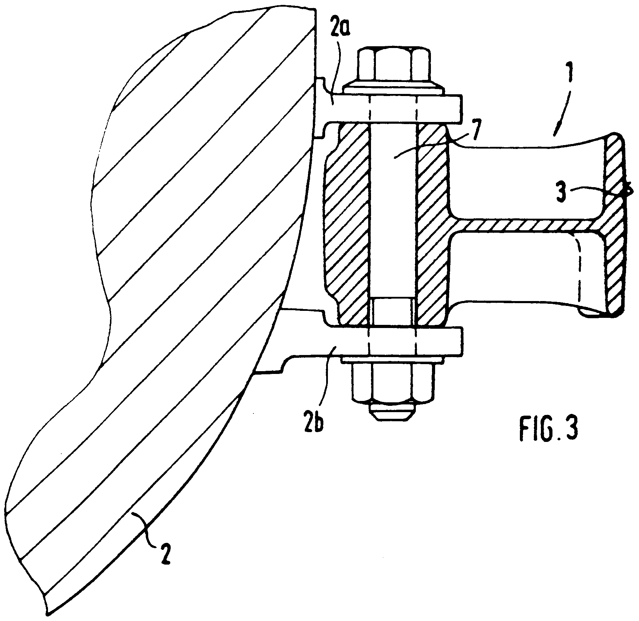

Der Querträger umfaßt zwei baugleiche Trägerteile 1, wobei nur ein linkes Trägerteil dargestellt ist. Dieses ist mit einem Seitenteil 2 (Fig. 3) verbunden, an dem Lenker einer Radaufhängung für ein Kraftfahrzeug angelenkt sind.

Das Trägerteil 1 ist winkelförmig ausgebildet und umfaßt einen etwa vertikal verlaufenden Schenkel 3 und einen sich anchließenden oberen der verlaufenden etwa horizontal ausgerichteten weiteren Schenkel 4, der an seinem Ende eine Zunge 5 aufweist, wobei das nicht gezeigte rechte Trägerteil eine Zunge 5a besitzt.

Die Verbindung des Querträgers am Seitenteil 2 erfolgt über zwei im Abstand übereinander angeordneten Befestigungsschrauben 6 und 7 im vertikalen Abschnitt des Schenkels 3. Hierzu sind am Seitenteil Stege 2a und 2b angeformt, zwischen denen der Träger eingespannt gehalten wird.

Eine Befestigung der beiden Trägerteile 1 miteinander erfolgt im Bereich der Zungen 5, 5a in der Mittenlängsebene X-X des Fahrzeuges über zwei Schrauben 9 und 10. Hierzu stehen die Zungen 5 und 5a in einer überlappenden Position. Die Zungen 5 und 5a sind jeweils endseitig des Schenkels 4 angeformt und mit zwei Aufnahmen 11 und 12 für die Befestigungsschrauben 9 und 10 versehen. Die eine Aufnahme 12 am freien Ende 13 ist zur Abstützung des Kopfes 14 der Schrauben 9 bzw. 10 und die andere Aufnahme 11 ist zur Abstützung der Mutter 15 der Schrauben 9 bzw. 10 ausgebildet. Die Zungen 5 und 5a weisen von der Aufnahmen 11 zur Aufnahme 12 jeweils eine Absetzung 16 auf, die zur Mittenlängsachse Y-Y des Trägers 1 unter einem Winkel verläuft. Die Befestigungsschrauben 9 und 10 sind in Aufnahmen 12 jeweils in einem Langloch 20 und in den weiteren Aufnahmen 11 in zylindrischen Bohrungen 21 geführt.

Die Zungen 5, 5a sind in der Weise ausgebildet, daß im Verbindungsbereich die Dicke D des I-Trägerprofils nicht überschritten wird. Hierzu steht der einen stärker dimensionierten Aufnahme 11 mit der Dicke a eine weniger stark dimensionierte Aufnahme 12 mit der Dicke b gegenüber.

Das Trägerteil 1 besteht aus einem I-Profil, wobei der vertikale Abschnitt des Schenkels 3 aus einem geschlossenen Profil mit durchgehender Wandung 17 und der etwa horizontal liegende Abschnitt 4 aus einem offenen I-Profil besteht, d.h. die Wandung ist mit Öffnungen 18 versehen. Zur Verstärkung sind kreuzförmig angeordnete Rippen 23 sowohl im vertikalen als auch im horizontalen Bereich der Schenkel 3, 4 des Trägerprofils vorgesehen.

## Patentansprüche

1. Querträger für einen Fahrschemel eines Kraftfahrzeuges, der mindestens zwischen zwei anschließenden und in Fahrzeuglängsrichtung sich erstreckenden Seitenteilen zur Aufnahme für eine Radaufhängung angeordnet ist, **dadurch gekennzeichnet**, daß der Querträger (1) zwei in einer Querebene angeordnete winkelförmig ausgebildete baugleiche Trägerteile umfaßt, deren obere querverlaufende Schenkel (4) endseitig jeweils eine Zunge (5, 5a) aufweisen, die überlappt in einer vertikalen Ebene angeordnet sind, wobei jede Zunge (5, 5a) eine verdickte Aufnahme (11) zur Abstützung für eine Gewindemutter (15) und eine weitere Aufnahme (12) zur Abstützung für einen Schraubenkopf (14) von Befestigungsschrauben (9, 10) aufweist, die in einer horizontalen Ebene angeordnet sind.

2. Querträger nach Anspruch 1, **dadurch gekennzeichnet**, daß jeder Teil des Querträgers (1) über zwei in einem vertikalen Abstand zueinander angeordnete und in Fahrzeuglängsrichtung sich erstreckende Befestigungsschrauben (6, 7) am Seitenteil (2) gehalten ist.

3. Querträger nach den Ansprüchen 1 und 2, **dadurch gekennzeichnet**, daß der vertikal verlaufende Schenkel (3) des Querträgers (1) aus einem geschlossenen I-Profil mit Rippen (23) und der obere querverlaufende Schenkel (4) aus einem offenen I-Profil mit Durchdringungen (18) gebildet ist, wobei die Durchdringungen (18) von den Rippen (23) begrenzt sind.

4. Querträger nach den Ansprüchen 1, 2 oder 3, **dadurch gekennzeichnet**, daß die beiden Zungen (5, 5a) der Schenkel (4) des Querträgers (1) in überlappender Befestigungslage der Gesamtdicke D des Querträgers entsprechen, die Aufnahmen (11, 12) am freien Ende (13) der Zungen (5, 5a) angeformt sind und der Aufnahme (12) jeweils die anschließende weitere, verdickte Aufnahme (11) gegenübersteht und zwischen den beiden Aufnahmen (11, 12) einer Zunge (5) bzw. (5a) jeweils eine Absetzung (16) vorgesehen ist, die unter einem Winkel zur Mittenlängsebene Y-Y des Querträgers (1) verläuft.

5. Querträger nach den Ansprüchen 1, 2, 3 oder 4, **dadurch gekennzeichnet**, daß die Befestigungsschrauben (9, 10) in der am freien Ende angeformten Aufnahmen (12) jeweils in einem Langloch (12) angeordnet sind, wobei die verdickten Aufnahmen (11) einen den Schrauben (9, 10) entsprechenden zylindrischen Bohrungsdurchmesser aufweisen.

## Claims

1. A cross-member for a subframe of a motor vehicle, arranged at least between two adjacent lateral parts extending in the longitudinal direction of the vehicle to form the receiving means for a wheel suspension, **characterized in that** the cross-member (1) comprises two structurally similar angled parts which are situated in a transverse plane and the upper transversely extending arms (4) of which each have a tongue (5, 5a) at the ends thereof, the tongues (5, 5a) being arranged to overlap in a vertical plane, wherein each tongue (5, 5a) has a thickened receiving means (11) to form a support for a threaded nut (15) and a further receiving means (12) to form a support for a head (14) of fastening bolts (9, 10) arranged in a horizontal plane.

2. A cross-member according to Claim 1, **characterized in that** each part of the cross-member (1) is held on the lateral part (2) by way of two fastening bolts (6, 7) arranged at a distance from each other vertically and extending in the longitudinal direction of the vehicle.

3. A cross-member according to Claims 1 and 2, **characterized in that** the vertically extending arm (3) of the cross-member (1) is formed by a closed I-section with ribs (23) and the upper, transversely extending arm (4) by an open I-section with perforations (18), wherein the perforations (18) are bounded by the ribs (23).

4. A cross-member according to Claim 1, 2 or 3, **characterized in that** the two tongues (5, 5a) of the arms (4) of the cross-member (1) in the overlapping fastened position correspond to the overall thickness **D** of the cross-member, the receiving means (11, 12) are integrally moulded on the free ends (13) of the tongues (5, 5a), and the further adjacent thickened receiving means (11) is opposite the respective receiving means (12), and an offset (16) extending at an angle to the median longitudinal plane **Y-Y** of the cross-member (1) is provided between the two respective receiving means (11, 12) of one tongue (5).

5. A cross-member according to Claim 1, 2, 3 or 4, **characterized in that** the fastening bolts (9, 10) in the receiving means (12) integrally moulded on the free end are arranged respectively in an elongate hole (12), wherein the thickened receiving means (11) have a cylindrical bore diameter corresponding to the bolts (9, 10).

## Revendications

1. Poutre transversale pour un faux-châssis d'un véhicule automobile, qui est placée au moins entre deux parties latérales se raccordant et s'étendant dans la direction longitudinale du véhicule, destinées à recevoir une suspension de roue, caractérisée en ce que la poutre transversale (1) comprend deux parties identiques dans leur construction, en forme d'angle, placées dans un plan transversal, dont les branches (4) supérieures, s'étendant transversalement, présentent chacune à une extrémité une languette (5, 5a) qui, se recouvrant sont placées dans un plan vertical, chaque languette (5, 5a) présentant un logement (11) surépaissi pour servir d'appui à un écrou fileté (15) et un autre logement (12) pour servir d'appui à une tête de vis (14) de vis de fixation (9, 10), qui sont placées dans un plan horizontal.

2. Poutre transversale selon la revendication 1, caractérisé en ce que chaque partie de la poutre transversale (1) est maintenue contre la partie latérale (2), par deux vis de fixation (6, 7) espacées l'une de l'autre verticalement et s'étendant dans la direction longitudinale du véhicule.

3. Poutre transversale selon les revendications 1 et 2, caractérisée en ce que la branche (3) s'étendant verticalement de la poutre transversale (1) est formée par un profilé en I fermé avec des nervures (23) et la branche (4) supérieure s'étendant transversalement est formé par un profilé en I ouvert avec des passages (18), les passages (18) étant délimités par les nervures (23).

4. Poutre transversale selon les revendications 1, 2 ou 3, caractérisée en ce que les deux languettes (5, 5a) des branches (4) de la poutre transversale (1) correspondent dans la position de fixation se recouvrant à l'épaisseur totale D de la poutre transversale, que les logements (11, 12) sont formés à l'extrémité libre (13) des languettes (5, 5a) et au logement (12) fait face l'autre logement (11) surépaissi, se raccordant, et entre les deux logements (11, 12) d'une languette (5 ou 5a) est prévu un méplat (16) qui s'étend en formant un angle par rapport au plan médian longitudinal Y-Y de la poutre transversale (1).

5. Poutre transversale selon les revendications 1, 2, 3 ou 4, caractérisée en ce que les vis de fixation (9, 10) sont placées dans les logements (12) formés à l'extrémité libre, chacune dans un trou allongé (12), les logements (11) surépaissis présentant un diamètre d'alésage cylindrique correspondant aux vis (9, 10).
